# EUROPÄISCHE PATENTSCHRIFT

(11) **EP 4 327 381 B1**
(45) Veröffentlichungstag und Bekanntmachung des Hinweises auf die Patenterteilung: **02.04.2025**
(21) Anmeldenummer: 22724053.8
(22) Anmeldetag: 21.04.2022
(51) Int. Cl.: H01M 8/0247, H01M 8/0273, H01M 8/0213, H01M 8/0221, H01M 8/0226

(54) **EINZELZELLANORDNUNG FÜR EINEN BRENNSTOFFZELLENSTAPEL**
INDIVIDUAL CELL ASSEMBLY FOR A FUEL CELL STACK
ENSEMBLE DE CELLULES INDIVIDUELLES POUR UN EMPILEMENT DE PILE À COMBUSTIBLE

(30) Priorität: 21.04.2021 DE 102021203983
(43) Veröffentlichungstag der Anmeldung: 28.02.2024
(73) Patentinhaber: cellcentric GmbH & Co. KG, 73230 Kirchheim/Teck-Nabern (DE)
(72) Erfinder: DANG, Wayne, Burnaby, British Columbia V3N 0G2 (CA); ADAM, David, Burnaby, British Columbia V3N 0G2 (CA)
(74) Vertreter: Platzöder Patentanwaltsgesellschaft mbH
(86) Internationale Anmeldenummer: PCT/EP2022/060480
(87) Internationale Veröffentlichungsnummer: WO 2022/223657

(56) Entgegenhaltungen:
- US-A1- 2007 275 288
- US-A1- 2011 318 665

## Beschreibung

Die Erfindung betrifft eine Einzelzellanordnung für einen Brennstoffzellenstapel nach der im Oberbegriff von Anspruch 1 näher definierten Art.

Brennstoffzellenstapel sind prinzipiell aus dem Stand der Technik bekannt. Bei Brennstoffzellenstapeln sind dabei eine Vielzahl von Einzelzellen aufeinandergestapelt und, über Bipolarplatten, fluidisch angebunden und elektrisch miteinander kontaktiert, um den ganzen Stapel elektrisch in Reihe zu schalten. Dieser Aufbau ist insbesondere bei PEM-Brennstoffzellen allgemein bekannt und üblich. Dabei ist es so, dass jede der Einzelzellanordnungen über eine sogenannte Membranelektrodenanordnung (MEA) und eine der Bipolarplatten verfügt. Werden diese Einzelzellen übereinandergestapelt, liegt die Membranelektrodenanordnung zwischen jeweils zwei benachbarten Bipolarplatten benachbarter Einzelzellanordnungen, um so den gesamten Stapel auszubilden.

Die DE 10 2017 219 507 A1 zeigt ein Verfahren zur Herstellung eines derartigen Aufbaus aus einer Bipolarplatte und einer Membranelektrodenanordnung, welche über ein eingespritztes Dichtmittel miteinander verbunden werden. Über das Dichtmittel wird außerdem beim Stapeln eine Abdichtung der Einzelzellanordnungen zueinander erzielt. Problematisch ist der Aufbau dabei dadurch, dass im Bereich des Dichtmittels eine größere Dicke vorliegt als in den sonstigen Bereichen, sodass beim Aufstapeln von mehreren Einzelzellanordnungen in diesem Bereich ein höherer Anpressdruck auf die Bipolarplatten wirkt als in den benachbarten Bereichen, in denen die Strömungsleit- und Verteilstrukturen, wie z.B. Kanäle, zur Medienversorgung der Membranelektrodenanordnung angeordnet sind. Diese ungleichmäßige Belastung kann zu einem mechanischen Versagen des Aufbaus führen.

Dies gilt insbesondere dann, wenn die Membranelektrodenanordnung als sogenannte gerahmte Membranelektrodenanordnung ausgebildet ist, bei welcher zusätzlich zu der eigentlichen Membranelektrodenanordnung ein Rahmen vorhanden ist, mit denen die einzelnen Schichten der Membranelektrodenanordnung verklebt sind. Im Bereich, in dem der Rahmen und die einzelnen Schichten der Membranelektrodenanordnung miteinander verklebt sind, wird dann durch den Kleber die Flexibilität noch weiter beeinträchtigt, sodass hier ein besonders hoher Anpressdruck zu erwarten ist. Gleichzeitig verringert dies den Anpressdruck im Bereich der aktiven Fläche und der strömungsverteilenden oder strömungsführenden Elemente der Bipolarplatte, sodass hier die Gefahr besteht, dass Medien im Bypass zwischen der Dichtung und dem Strömungsbereich strömen und damit nicht im Bereich der elektrochemisch aktiven Fläche der Membranelektrodenanordnung. Ferner wird die flächige Anlage der Bipolarplatte an der Gasdiffusionslage (GDL) der Membranelektrodenanordnung schlechter. Hierdurch steigt der elektrische Widerstand. Dies führt zu mehr Abwärme und einem schlechteren Wirkungsgrad.

Zum weiteren Stand der Technik kann außerdem auf die EP 2 054 965 B1 verwiesen werden. Auch hier ist eine Bipolarplatte beschrieben, bei welcher die Strömungsverteilung durch entsprechend ausgestaltete strömungsführende Elemente verbessert wird.

Weiterhin offenbart US 2011/318665 A1 einen Brennstoffzellenstapel, bei dem mehrere Einzelzellenmodule gestapelt sind, die jeweils ein Dichtungselement aufweisen, das an einer Membran-Elektrodenanordnung angeordnet ist. Dabei sind Dichtungselemente der Dichtung einstückig mit den Umfangsabschnitten beider Oberflächen der Membran-Elektrodenanordnung geformt.

Das Dokument US 2007/275288 A1 offenbart einen Brennstoffzellenstapel, der geradlinige Kathodenströmungskanäle und geradlinige Anodenströmungskanäle durch einen Dichtungsbereich zwischen Bipolarplatten und dem Stapel aufweist. Der Brennstoffzellenstapel weist eine Dichtung auf, die um den aktiven Bereich des Stapels und zwischen Stapelsammelleitungen und dem aktiven Bereich verläuft.

Die Aufgabe der hier vorliegenden Erfindung besteht nun darin, eine verbesserte Einzelzellanordnung, mit einer gerahmte Membranelektrodenanordnung anzugeben, bei welcher die eingangs genannten Probleme vermieden oder minimiert werden.

Erfindungsgemäß wird diese Aufgabe durch eine Einzelzellanordnung mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen.

Bei der erfindungsgemäßen Einzelzellanordnung ist es so, dass in dieser eine Bipolarplatte und eine gerahmte Membranelektrodenanordnung mit einem elektrochemisch aktiven Flächenbereich im Zentrum einerseits und einem diesen umgebenden Rahmen andererseits verbaut werden. Die Einzelzellanordnungen werden dann gleichsinnig übereinandergestapelt, sodass die Oberfläche der Membranelektrodenanordnung der einen Einzelzellanordnung jeweils an der Rückseite der Bipolarplatte der benachbarten Einzelzellanordnung anliegt. In der üblichen Art und Weise ist dabei im Randbereich der Bipolarplatte auf wenigstens einer ihre Oberflächen eine Dichtnut zur Aufnahme einer Dichtung vorgesehen. Bei der gerahmten Membranelektrodenanordnung liegt diese Dichtung zwischen dem Rahmen und der Bipolarplatte. Hierfür kann beispielsweise eine Dichtung in die Dichtnut eingelegt werden oder ein entsprechendes Dichtmaterial ist auf die Bipolarplatte und/oder dem Rahmen aufgetragen, sodass beim Zusammenbau dieses Material im Bereich der Dichtnut zu liegen kommt und den gestapelten Aufbau zuverlässig abdichtet.

Erfindungsgemäß ist es nun so, dass auf beiden Oberflächen der Bipolarplatte korrespondierend zwischen der Dichtnut und einem Strömungsbereich, welcher Strömungsverteil- und Strömungsleitelemente umfasst, jeweils eine weitere Nut vorgesehen ist. Diese dient als Aufnahmenut für einen Verbindungsbereich zwischen dem Rahmen und der Membranelektrodenanordnung. Eine solche auf beiden Oberflächen korrespondierend angeordnete Aufnahmenut ermöglicht es dann, beim Stapeln der Einzelzellanordnungen den Verbindungsbereich teilweise in der einen und teilweise in der anderen benachbarten Bipolarplatte aufzunehmen. Außerhalb des eigentlichen Strömungsbereichs, welcher das Strömungsfeld und Verteilbereiche zum Verteilen und Sammeln der Medien umfasst, liegt also diese Aufnahmenut. Sie ist damit korrespondierend zu dem Verbindungsbereich zwischen dem Rahmen und den Schichten der Membranelektrodenanordnung angeordnet. In diesem Verbindungsbereich ist der Rahmen typischerweise mit einer katalysatorbeschichteten Membran und zwei Gasdiffusionslagen der Membranelektrodenanordnung verklebt. Im Bereich der Verklebung überlappen sich alle vier Materialien bzw. Schichten zumindest abschnittsweise. Im Verbindungsbereich ist außerdem ein Kleber vorgesehen, welcher typischerweise eine geringere Flexibilität und Kompressibilität als die durch ihn verklebten Schichten aufweist. Es entsteht in der Praxis also umlaufend um die elektrochemisch aktive Fläche der Membranelektrodenanordnung in ihrem Verbindungsbereich mit dem Rahmen eine Art Wulst. Dies führt zu den eingangs geschilderten Problemen. All diese Probleme lassen sich nun durch die jeweils zusätzliche Aufnahmenut auf beiden Oberflächen der Bipolarplatte vermeiden. Hierdurch wird im Bereich der Bipolarplatte Platz für den oben beschriebenen Wulst des Verbindungsbereichs geschaffen, sodass trotz des Wulstes eine relativ homogene Anpressdruckverteilung im Bereich der Bipolarplatte, und hier insbesondere im Strömungsbereich der Bipolarplatte, erzielt werden kann.

Für den Fall, dass die Aufnahmenut für den Verbindungsbereich nur auf einer Seite der Bipolarplatte ausgebildet ist, führt dies dann in der Praxis zu einer entsprechenden Verformung des Verbindungsbereichs, da die eine Bipolarplatte die Aufnahmenut aufweist und die andere Bipolarplatte eben ausgebildet ist. Das Material der gerahmten Membranelektrodenanordnung ist in der Praxis jedoch meist so flexibel, dass dies keine weiteren Probleme verursacht. Eine auf beiden Oberflächen korrespondierend angeordnete Aufnahmenut kann dies zusätzlich vermeiden.

Die Tiefe der Aufnahmenut kann dabei gemäß einer vorteilhaften Ausgestaltung so ausgebildet sein, dass sie größer als die mittlere Dicke des Verbindungsbereichs zwischen dem Rahmen und der Membranelektrodenanordnung ist. Bei einer Aufnahmenut wäre die Tiefe der Aufnahmenut dabei die Tiefe dieser Aufnahmenut. Bei zwei korrespondierenden Aufnahmenuten, welche beim Stapeln der Bipolarplatten aufeinandertreffen, wäre es dann selbstverständlich deren gemeinsame Tiefe, welche dann auf jeder Oberfläche der Bipolarplatte jeweils nur die Hälfte der ansonsten benötigten Tiefe betragen müsste. In beiden Fällen entsteht in dem Abschnitt des Verbindungsbereichs quasi kein Anpressdruck oder zumindest kein gegenüber den umgebenden Bereichen erhöhter Anpressdruck auf die Bipolarplatten. Ein sehr homogene Anlage der Membranelektrodenanordnung im Strömungsbereich wird damit möglich. Dies führt zu einer gleichmäßigen Verteilung der Edukte und zu einem flächig sehr homogenen und geringen elektrischen Übergangswiderstand zwischen der Membranelektrodenanordnung und der Bipolarplatte.

Ein weiteres Problem bei derartigen Aufbauten ist es aber auch, dass sich die einzelnen Schichten der Membranelektrodenanordnung, also die katalysatorbeschichtete Membran und die beiden Gasdiffusionslagen ausgehend von dem Verbindungsbereich über die Lebensdauer der Brennstoffzelle bzw. der Einzelzellanordnung gelegentlich delaminieren. Um einer solchen Delamination entgegenzuwirken, kann es gemäß einer außerordentlich günstigen Weiterbildung der erfindungsgemäßen Einzelzellanordnung auch vorgesehen sein, dass in der Aufnahmenut auf wenigstens einer Oberfläche der Bipolarplatte und in wenigstens einem Abschnitt des Umfangs der Aufnahmenut um den Strömungsbereich auf ihrer dem Strömungsbereich zugewandten Seite ein Quetschvorsprung vorgesehen ist. Ein solcher Quetschvorsprung hat nun die Aufgabe, das Material der gerahmten Membranelektrodenanordnung bereichsweise einzuquetschen und mechanisch zusammenzuhalten, und zwar insbesondere im Übergangsbereich, in dem die drei Schichten der Membranelektrodenanordnung aufgefächert und mit dem Rahmen verklebt sind. Dabei ist die Höhe des Quetschvorsprungs kleiner als die Tiefe der jeweiligen Aufnahmenut, in welcher dieser angeordnet ist. Die Quetschung wird also prinzipiell in einem vorgegebenen Teilabschnitt der Aufnahmenut erzielt, ohne dass vergleichbar hohe Kräfte auftreten, wie wenn auf die Aufnahmenut gänzlich verzichtet wird. Durch die Anordnung auf der Seite des Strömungsbereichen werden dabei primär die drei Schichten der Membranelektrodenanordnung zusammengehalten und es wird keine nennenswerter Anpressdruck auf den zusätzlich den Rahmen aufweisenden Bereich ausgeübt.

Der Quetschvorsprung kann dabei gemäß einer außerordentlich günstigen Weiterbildung der erfindungsgemäßen Einzelzellanordnung als Stufe auf dem Nutgrund der Aufnahmenut ausgebildet sein. Insbesondere reicht es dabei, wenn bei zwei korrespondierenden Aufnahmenuten in der jeweiligen Bipolarplatte einer der Nutgründe den entsprechenden Quetschvorsprung aufweist. Ferner kann es vorgesehen sein, dass der Quetschvorsprung nur benachbart zu dem Strömungsfeld des Strömungsbereichs angeordnet ist, da hier der Verbindungsbereich über die Länge des Aufbaus besonders anfällig für eine Delamination ist. Der Quetschvorsprung kann dabei in den Bereichen, in denen er angeordnet ist, sowohl durchlaufend ausgebildet sein als auch aus einzelnen linear aufeinanderfolgenden Abschnitten, Punkten oder dergleichen bestehen, da dies zum Verhindern der Delamination bereits ausreicht.

Um den besprochenen Bypasseffekt der Medien um die elektrochemisch aktive Fläche der Membranelektrodenanordnung, welche benachbart zu dem Strömungsfeld liegt, entgegenzuwirken, kann es nun ferner vorgesehen sein, dass zwischen der Aufnahmenut und dem Strömungsbereich ein umlaufend geschlossener ebener Bereich beider Oberflächen der Bipolarplatte vorgesehen ist, welcher bündig mit dem Strömungsverteil- und -leitelementen abschließt oder diese überragt. Der ebene umlaufend geschlossene Bereich umgibt den Strömungsbereich also wie eine Art Mauer. Dadurch wird ein Fließen bzw. Strömen der zugeführten Edukte in einem Bypass zwischen dem Strömungsbereich und der Dichtnut, um den elektrochemisch aktiven Bereich der Einzelzellanordnung herum, verhindert. Um die Verteilung des Anpressdrucks in dem Strömungsbereich nicht nachteiling zu beflussen reicht dabei eine den Strömungsverteil- und -leitelementen entsprechende Höhe des ebenen Bereichs aus. Die Ausgestaltung als leichter Vorsprung wäre jedoch ebenso denkbar.

Von besonderem Vorteil ist dies bei einem allgemein bekannten Aufbau von Bipolarplatten aus zwei Schichten, welche jeweils die Strömungsbereiche für die Anodenseite oder die Kathodenseite aufweisen und an ihrer einander zugewandten Oberfläche ein Kühlmittelströmungsfeld. Die Strömungsbereiche der Kathodenseite und/oder der Anodenseite, insbesondere von beiden Seiten, wären dann über Durchbrüche, sogenannte "backfeed slots", in der jeweiligen Schicht der Bipolarplatte mit der anderen Oberfläche der Schicht verbunden, in deren Bereich sie dann mit Medienanschlussöffnungen verbunden sind. Hierdurch wird die eigentliche Zufuhr und Abfuhr der Medien zwischen die Schichten und damit quasi in das Innere der Bipolarplatte verlagert. Beispielhaft kann zu den "backfeed slots" auf die WO 2008/061094 A1 verweisen werden. Durch einen solchen Aufbau mit "backfeed slots" ist ein um den gesamten Strömungsbereich unterbrechungsfrei umlaufender ebener Bereich oder leichter Vorsprung zum Verhindern von Bypassströmungen besonders effizient zu realisieren.

Die für die Bipolarplatte der erfindungsgemäßen Einzelzellanordnung mit gerahmter Membranelektrodenanordnung entstehende Geometrie wirkt dabei auf den ersten Blick der Beschreibung relativ komplex. Bei der Ausgestaltung der Bipolarplatte aus einem kohlenstoffhaltigen Material in einer Kunststoffmatrix ist seine Ausbildung jedoch relativ einfach zu realisieren, da derartige Bipolarplatten bzw. ihre Hälften typischerweise in einer Form bzw. einem Gesenk hergestellt werden, sodass der Aufwand für das zusätzliche Einbringen von Aufnahmenut, Quetschvorsprung und/oder Vorsprung zum Verhindern einer Bypassströmung relativ einfach umzusetzen ist. Da solche Bipolarplatten, welche auf einem kohlenstoffhaltigen Material basieren, auch die primäre Ausgestaltung der Bipolarplatte der erfindungsgemäßen Einzelzellanordnung sind, überwiegen die zu erzielenden Vorteile den erhöhten Fertigungsaufwand bei weitem. Die Ausnahmenut hat dabei den Vorteil die benötigte Materialmenge zu reduzieren, da weniger Volumen innerhalb der Platte mit Material "gefüllt" ist. Bei größeren Stückzahlen ist damit eine wirtschaftlich nennenswerte Einsparung möglich, bei gleichzeitig verbesserten Eigenschaften der Platte.

Weitere vorteilhafte Ausgestaltungen der erfindungsgemäßen Einzelzellanordnung für einen Brennstoffzellenstapel ergeben sich auch aus den Ausführungsbeispielen, welche nachfolgend unter Bezugnahme auf die Figuren näher beschrieben sind.

Dabei zeigen:
- Fig. 1: eine Draufsicht auf eine mögliche Bipolarplatte gemäß dem Stand der Technik;
- Fig. 2: einen Aufbau einer Einzelzellanordnung und einer zusätzlichen Bipolarplatte gemäß dem Schnitt A-A in einer Variante gemäß dem Stand der Technik, im nicht verpressten Zustand;
- Fig. 3: eine erste mögliche Ausführungsform einer erfindungsgemäßen Einzelzellanordnung mit einer zusätzlichen Bipolarplatte im verpressten Zustand analog zu dem Schnitt A-A;
- Fig. 4: eine zweite mögliche Ausführungsform einer erfindungsgemäßen Einzelzellanordnung mit einer zusätzlichen Bipolarplatte im verpressten Zustand analog zu dem Schnitt A-A;
- Fig. 5: eine dritte mögliche Ausführungsform einer erfindungsgemäßen Einzelzellanordnung mit einer zusätzlichen Bipolarplatte im verpressten Zustand analog zu dem Schnitt A-A; und
- Fig. 6: ein Ausschnitt einer Bipolarplatte der dritten Ausführungsform in einer dreidimensionalen Ansicht analog zu dem Schnitt A-A.

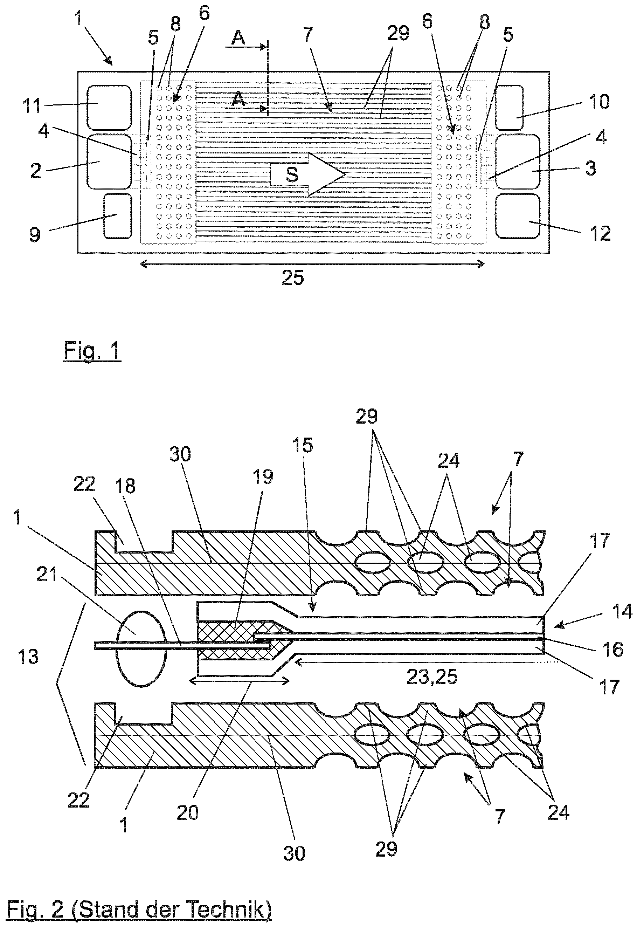

In der Darstellung der Figur 1 ist eine Bipolarplatte 1 in einer Ansicht von ihrer Kathodenseite her beispielhaft gezeigt. Der Aufbau entspricht dabei beispielsweise dem Stand der Technik bzw. einer schematischen Darstellung und dient hier lediglich zur Erläuterung der einzelnen Bereiche. Der reale Aufbau besteht dabei aus zwei Plattenhälften bzw. -schichten, einer kathodenseigen Schicht und einer dahinter angeordneten anodenseitigen Schicht, welche miteinander verbunden werden und zwischen sich ein in den späteren Figuren noch erkennbares Kühlmedienströmungsfeld 24 einschließen.

In der hier beispielhaft dargestellten kathodenseitigen Ansicht wird Luft bzw. Sauerstoff über eine Medienanschlussöffnung 2, welche hier als Medieneintritt dient, zugeleitet. Diese Medienanschlussöffnung 2 läuft durch den gesamten Brennstoffzellenstapel, welcher hier nicht dargestellt ist, sodass über diese Medienanschlussöffnung 2 alle Einzelzellanordnungen 13 (Vgl. Figur 2 ff) innerhalb des Brennstoffzellenstapels entsprechend mit Sauerstoff versorgt werden können. Auf der gegenüberliegenden Seite ist eine Medienanschlussöffnung 3 erkennbar, über welche Kathodenabgas wieder abströmt. In vielen Fällen ist es so, dass die Medienanschlussöffnungen 2, 3 über in der hier gezeigten Darstellung auf der Rückseite bzw. zwischen den Schichten der Bipolarplatte 1 liegende Kanäle 4 mit einem Durchbruch 5 verbunden sind. Dieser Durchbruch 5 ist dann seinerseits mit einem Verteilbereich 6 mit Strömungsverteilelementen 8 verbunden. In der unterhalb der Bipolarplatte 1 mit einem Pfeil gekennzeichnten Strömungsrichtung S des Mediums strömt dieses dann ausgehend von der Medienanschlussöffnung 2, durch welche der Sauerstoff zuströmt, durch die Kanäle 4 und über den auch als "backfeed slot" bezeichnten Druchbruch 5 in den Verteilbereich 6. Über die offenen - also die Strömung nicht blockierenden und leitenden - hier als Noppen ausgestalteten Strömungsverteilelemente 8 wird die Strömung auf den gesamten Querschnitt der Bipolarplatte 1 verteilt und strömt dann durch ein Strömungsfeld 7, welches die aktive Fläche der Einzelzellanordnung 13 benachbart ist. In dem Strömungsfeld 7 wird die Strömung durch parallel verlaufende Strömungsleitelemente 29 in Form von Rippen geführt. Sie gelangt dann in einen weiteren Verteilbereich 6, um dann über den hier ebenfalls mit 5 bezeichneten Durchbruch und die zwischen den Plattenhälften der Bipolarplatte 1 liegenden Kanäle 4 in die Medienanschlussöffnung 3 zu gelangen und dort wieder abzuströmen. Die beiden Verteilbereiche 6 und das Strömungsfeld 7 bilden dabei den Strömunsgbereich 25 auf der jeweilgen Oberfläche der Bipolarplatte 1 aus.

Bezüglich der Durchströmung gilt Vergleichbares für die Medienanschlussöffnungen 9, 10, welche zur Zufuhr und Abfuhr von Wasserstoff auf der gegenüberliegenden Seite der Bipolarplatte 1 dienen. Dazwischen liegt das Kühlmedienströmungsfeld 24, welches über die Medienanschlussöffnungen 11, 12 entsprechend versorgt wird.

Die nachfolgenden Figuren 2 bis 5 zeigen nun jeweils einen schematisch angedeuteten Ausschnitt einer Einzelzellanordnung 13, bestehend aus einer Bipolarplatte 1 und einer gerahmten Membranelektrodenanordnung 14 (MEFA - membrane electrode frame assembly) sowie eine zusätzliche Bipolarplatte 1, um den Effekt beim Aufstapeln der Einzelzellanordnungen 13 erläutern zu können. In der Schnittdarstellung ist erkennbar, dass die gerahmte Membranelektrodenanordnung 14 einerseits aus einer Membranelektrodenanordnung 15 (MEA) besteht. Diese wird aus einer katalysatorbeschichteten Membran 16, welche auch als CCM (catalyst coated membrane) bezeichnet wird, und zwei Gasdiffusionslagen 17 (GDL) aufgebaut ist. Im Randbereich der gerahmten Membranelektrodenanordnung 14 überlappt die katalysatorbeschichtete Membran 16 dabei abschnittsweise einen Rahmen 18, welcher typischerweise aus PEN (Polyethylennaphthalat) ausgebildet ist. Kreuzschraffiert ist in der Darstellung der Figur 2 ein Kleber 19 angedeutet, welcher die einzelnen Schichten 16, 17 der Membranelektrodenanordnung 15 und den Rahmen 18 miteinander verbinden. Dieser in der Figur 2 mit 20 markierte Verbindungsbereich der gerahmten Membranelektrodenanordnung 14 weist in der Praxis nun eine größere Dicke auf, als der Rest der gerahmten Membranelektrodenanordnung 14. Gleichzeitig ist der Aufbau im Bereich des Klebers 19 nicht oder weniger stark kompressibel als in den ihn umgebenden Bereichen der gerahmten Membranelektrodenanordnung 14, insbesodere als die elektrochemisch aktiven Bereiche.

In der Darstellung des Standes der Technik in Figur 2 ist dabei der nicht verpresste Aufbau gezeigt. Wird dieser nun verpresst, wird ein Dichtmaterial 21 zwischen einer Dichtnut 22 der einen Bipolarplatte 1 und einer Fläche oder optional auch einer weiteren Dichtnut der anderen Bipolarplatte 1 verpresst und dichtet den Aufbau nach außen ab. Gleichzeitig wird die elektrochemisch aktive Fläche, in der Darstellung der Figur 2 rechts des Verbindungsbereichs 20, welche hier mit 23 bezeichnet ist, mit dem jeweiligen Strömungsfeld 7 der jeweiligen Bipolarplatte 1 verpresst, wobei von diesem Strömungsfeld 7 jeweils nur einige Kanäle und Strömungsleitelemente 29 zu erkennen sind. Zwischen den beiden Strömungsfeldern 7 der Bipolarplatte 1 ist in ihrem Inneren außerdem ein Kühlmedienströmungsfeld erkennbar, welches durch die Bezeichnung einiger seiner Kanäle mit dem Bezugszeichen 24 gekennzeichnet ist. Eine Trennlinie 30 zeigt den in der Praxis üblichen Aufbau der Bipolarplatte 1 aus zwei aufeinanderliegend und miteinander verbundenen Schichten.

Beim Verpressen der beiden Bipolarplatten 1 in der Darstellung gemäß Figur 2 kommt es nun also einerseits zu einem Abdichten des Aufbaus im Bereich der Dichtnut 22 durch die Dichtmasse 21 und gleichzeitig zu einem sehr starken Anpressdruck auf den Verbindungsbereich 20 der gerahmten Membranelektrodenanordnung 14. Dies führt zu einer hohen mechanischen Belastung der beiden Bipolarplatten 1. Im schlimmsten Fall kann dies zu einer mechanischen Beeinträchtigung, zu Rissen oder dergleichen führen, welche höchst unerwünscht sind, da sie die Anodenseite und die Kathodenseite strömungstechnisch miteinander verbinden könnten und daneben auch die Dichtheit des gesamten Aufbaus in Frage stellen können. Ein weiterer Nachteil ist der im Bereich der Strömungsfelder 7 sehr viel geringere Anpressdruck als im benachbarten Verbindungsbereich 20, sodass im elektrochemisch aktiven Bereich 23 die Gefahr besteht, dass Medien aufgrund des geringeren Anpressdrucks im Bereich der Strömungsfelder 20 seitlich ausweichen und beispielsweise im Verbindungsbereich oder zwischen dem eigentlichen Strömungsfeld 7 und dem Verbindungsbereich strömen. Die elektrochemisch aktive Fläche wird dadurch von den strömenden Medien zumindest teilweise umgangen, was ein gravierender Nachteil hinsichtlich der Leistungsfähigkeit und vor allem der Leistungsdichte einer aus solchen Einzelzellanordnungen 13 aufgebauten Brennstoffzelle ist. Ferner steigt mit dem sinkenden Anpressdruck auch der elektrische Übergangswiderstand zwischen den Bipolarplatten 1 und dem Gasdiffusionslagen 17 in unerwüschter Weise an.

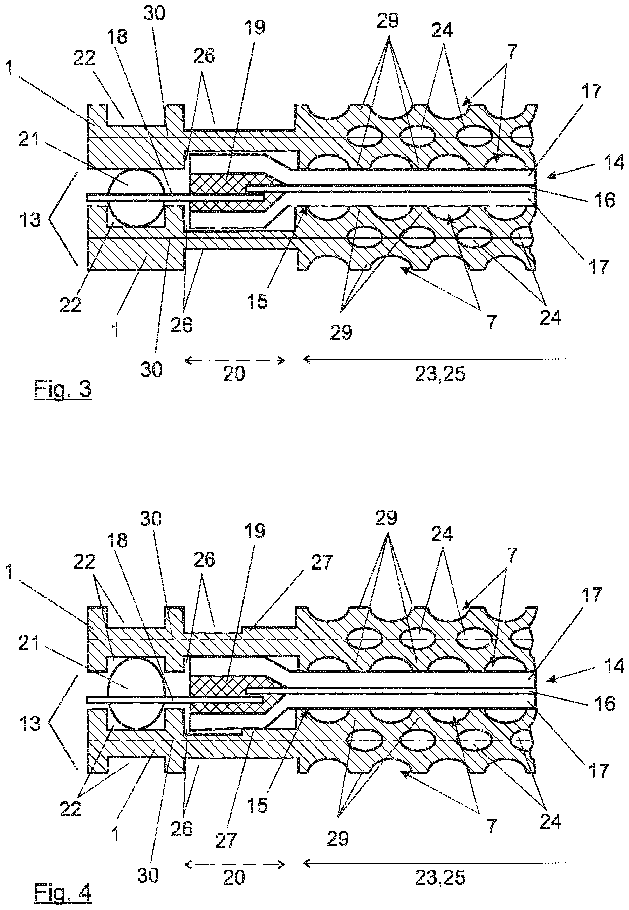

Eine Lösung für die genannten Probleme bietet nun der in Figur 3 gezeigte Aufbau. Zwischen der Dichtnut 22 und dem mit dem elektrochemisch aktiven Bereich 23 korrespondierenden Strömungsbereich 25 ist auf zumindest einer der Oberflächen der Bipolarplatte 1, hier vorzugsweise auf beiden Oberflächen jeder der Bipolarplatten 1, eine Aufnahmenut 26 für den Verbindungsbereich 20 der gerahmten Membranelektrodenanordnung 14 angeordnet. Diese Aufnahmenut 26 hat dabei den ganz entscheidenden Vorteil, dass der Verbindungsbereich, welcher quasi einen Wulst umlaufend in der gerahmten Membranelektrodenanordnung 14 ausbildet, in dieser Aufnahmenut 26 aufgenommen werden kann. Im Idealfall ist die Tiefe der Aufnahmenut 26 so, dass kein oder kaum Anpressdruck auf den Verbindungsbereich 20 ausgeübt wird, sodass ein möglichst homogener Anpressdruck zwischen den Strömungsfeldern 7 im Strömungsbereich 25 einerseits und dem elektrochemisch aktiven Bereich 23 der Membranelektrodenanordnung 15 andererseits erzielt werden kann. Dies stellt eine möglichst gleichmäßige Verteilung der Medien innerhalb der für sie vorgesehenen Bereiche ebenso sicher wie einen homogenen und niedrigen elektrischen Übergangswiderstand.

In der Praxis ist es so, dass es gelegentlich zu einem Delaminieren des Aufbaus der Membranelektrodenanordnung 15 kommt. Meist beginnt dies im Verbindungsbereich 20, und zwar in dem Bereich, in dem die drei Schichten 16, 17 der Membranelektrodenanordnung 15 aufgefächert sind, um mit dem Rahmen 18 über den Kleber 19 verbunden zu werden. In diesem Bereich, in dem prinzipbedingt ein Abstand zwischen den beiden Gasdiffusionslagen 17 und der mit katalysatorbeschichteten Membran 16 vorliegt, startet häufig das Problem der Delamination. Um dem entgegenzuwirken, ist in der Ausführungsvariante der Einzelzellanordnung 13 gemäß Figur 4 ein Quetschvorsprung 27 am Nutgrund zumindest einer der Aufnahmenuten 26 vorgesehen. Der Quetschvorsprung 27 ist dabei so ausgebildet, dass er eine deutlich geringere Höhe als die Tiefe der Aufnahmenut 26 hat, sodass er zwar mechanisch die drei Schichten der Membranelektrodenanordnung 24 zusammenhält, nicht jedoch das Problem des höheren Anpressdrucks in diesem Bereich als in den benachbarten Bereichen der Strömungsfelder 7, wie es im eingangs genannten Stand der Technik beschrieben ist, verursacht.

Als weitere Variante im Aufbau zeigt die Figur 4 eine beidseite Dichtnut 22.

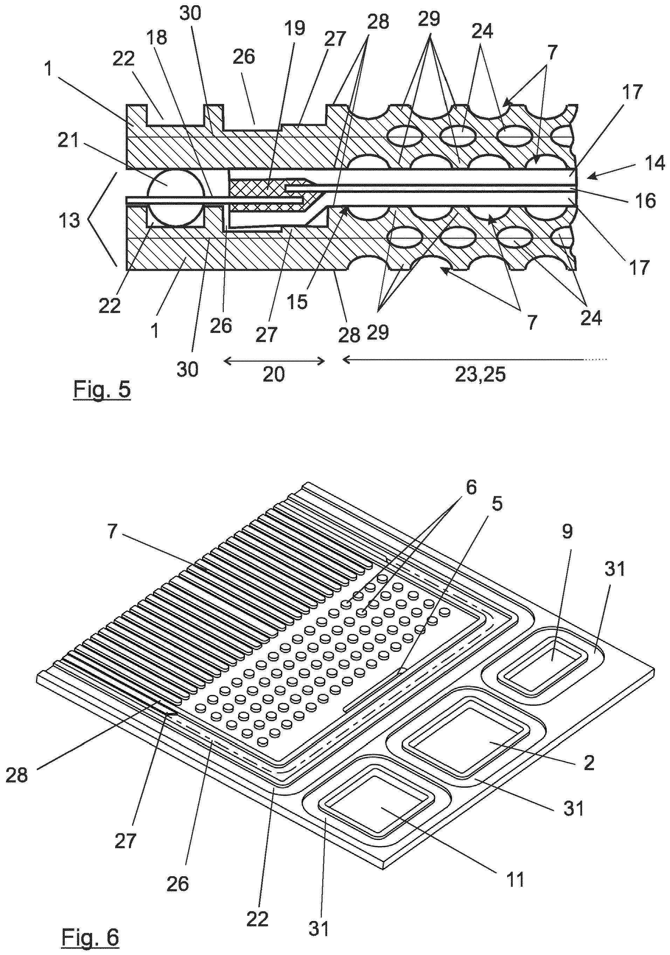

Wie bereits erwähnt wird durch den homogeneren Anpressdruck im Bereich der Strömungsfelder 7 die Gefahr einer eventuellen Bypassströmung um die Strömungsfelder 7 bereits deutlich reduziert. Dennoch kann eine ergänzende und in Figur 5 dargestellte Variante der Bipolarplatte 1 der Einzelzellanordnung 13 es vorsehen, dass ein lückenlos um den Strömungsbereich 25 umlaufender ebener Bereich 28 vorgesehen ist. Über diesen ebenen Bereich 28 kann eine Abdichtung des gesamten Strömungsbereichs nach außen erzielt werden kann, um so das Ausweichen von Medien in eine Bypassströmung um die Strömungsfelder 7 bzw. den Strömungsbereich 25 herum zu verhindern. Dieser ebene Bereich 28 ist dabei auf beiden Seiten vorgesehen. Er kann auf einer der Seiten auch als komplett ebene Fläche des Randes der Bipolarplatte 1 ausgebildet sein, wie es in der Figur 5 angedeutet ist. Eine beliebige Kombination aller in den Figuren 3 bis 5 gezeigten und/oder anhand derselben beschriebenen Einzelaspekte untereinander ist jedoch ebenso denkbar.

In der Darstellung der Figur 6 ist abschließend ein dreidimensionaler Ausschnitt aus einer Bipolarplatte 1 in einer auf die Kathodenseite gerichtenen Blickrichtung gezeigt. Dabei sind zwei der Medienanschlussöffnungen, hier die Medienanschlussöffnung 11 und 2, entsprechend der Darstellung in Figur 1 zu erkennen. Sie sind jeweils von einer eigenen Dichtnut 31 umgeben. Die Medienanschlussöffnung 2 ist über die hier nicht erkennbaren, da im Inneren der Bipolarplatte 1 verlaufenden Kanäle 4, mit dem Durchbruch 5 verbunden, welcher hier in Form von drei Öffnungen ausgebildet ist. Auf diesen folgt dann in Strömungsrichtung des Mediums der mit 6 bezeichnete Verteilbereich mit seinen punktartigen Strukturen 8 und im Anschluss das Strömungsfeld 7. Der gesamte Strömungsbereich 25 ist dabei im Randbereich der Bipolarplatte 1 von der Dichtnut 22 umgeben. Auf diese folgt nach Innen dann die Aufnahmenut 26 sowie der mit 28 bezeichnete ebene Bereich als Bypasssperre. Der Quetschvorsprung 27 ist in dem hier dargestellten Ausführungsbeispiel benachbart zu dem eigentlichen Strömungsgeld 7 druchgehend erkennbar. Er kann um den Verteilberich 6 optional fortgeführt werden, wie es hier druch die gestrichelte Linie 32 angedeutet ist.

## Patentansprüche

1. Einzelzellanordnung (13) für einen Brennstoffzellenstapel mit einer gerahmten Membranelektrodenanordnung (14), welche einen elektrochemisch aktiven Bereich (23) aus zwei Gasdiffusionslagen (17) und einer katalysatorbeschichteten Membran (16) umfasst, welche mit einem Rahmen (18) verklebt sind, mit einer Bipolarplatte (1), welche Strömungsverteil- und -leitelemente (6, 7) in einem mit dem elektrochemisch aktiven Bereich (23) korrespondierenden Strömungsbereich (25) aufweist, wobei in einem den Strömungsbereich (25) umgebenden Randbereich der Bipolarplatte (1) auf wenigstens einer ihrer Oberflächen eine Dichtnut (22) zur Aufnahme einer Dichtung (21) zwischen dem Rahmen (18) und der Bipolarplatte (1) um den Strömungsbereich (25) umläuft, wobei
auf beiden Oberflächen der Bipolarplatte (1) jeweils zwischen der Dichtnut (22) und dem Strömungsbereich (25) korrespondierend eine Aufnahmenut (26) für einen Verbindungsbereich (20) zwischen dem Rahmen (18) und der Membranelektrodenanordnung (15) angeordnet ist.

2. Einzelzellanordnung (13) nach Anspruch 1,
**dadurch gekennzeichnet, dass**
eine Tiefe der Aufnahmenut (26), oder wenn zwei korrespondierende Aufnahmenuten (26) sich beim Stapeln der Bipolarplatten (1) gegenüberliegen, deren gemeinsame Tiefe, gleich oder größer als die mittlere Dicke des Verbindungsbereichs (20) zwischen dem Rahmen (18) und der Membranelektrodenanordnung (15) ist.

3. Einzelzellanordnung (13) nach Anspruch 1 oder 2,
**dadurch gekennzeichnet, dass**
in der Aufnahmenut (26) auf wenigstens einer der Oberflächen der Bipolarplatte (1) und auf wenigstens eines Abschnitts der Aufnahmenut (26) um den Umfang des Strömungsbereichs (25) auf ihrer dem Strömungsbereich (25) zugewandten Seite ein Quetschvorsprung (27) vorgesehen ist, dessen Höhe kleiner als die Tiefe der jeweiligen Aufnahmenut (26) ist.

4. Einzelzellanordnung (13) nach Anspruch 3,
**dadurch gekennzeichnet, dass**
der Quetschvorsprung (27) als Stufe auf dem Nutgrund der Aufnahmenut (26) ausgebildet ist.

5. Einzelzellanordnung (13) nach Anspruch 1 und einem der Ansprüche 3 oder 4,
**dadurch gekennzeichnet, dass**
der Quetschvorsprung (27) nur in einer der Aufnahmenuten (26) angeordnet ist.

6. Einzelzellanordnung (13) nach Anspruch 3, 4 oder 5,
**dadurch gekennzeichnet, dass**
der Quetschvorsprung (27) nur benachbart zu dem Strömungsfeld (7) des Strömungsbereichs (25) in der Aufnahmenut (26) angeordnet ist.

7. Einzelzellanordnung (13) nach einem der Ansprüche 3 bis 6,
**dadurch gekennzeichnet, dass**
der Quetschvorsprung (27) aus einer Abfolge diskreter einzelnen Vorsprünge besteht.

8. Einzelzellanordnung (13) nach einem der Ansprüche 1 bis 7,
**dadurch gekennzeichnet, dass**
zwischen der Aufnahmenut (26) und dem Strömungsbereich (25) ein umlaufend geschlossener ebener Bereich (28) beiden Oberflächen der Bipolarplatte (1) vorgesehen ist, welcher bündig mit dem Strömungsverteil- und -leitelementen (6, 7) abschließt oder diese überragt.

9. Einzelzellanordnung (13) nach einem der Ansprüche 1 bis 8,
**dadurch gekennzeichnet, dass**
die Bipolarplatte (1) aus einem kohlenstoffhaltigen Material in einer Kunststoffmatrix ausgebildet ist.

## Claims

1. A single cell assembly (13) for a fuel cell stack having a framed membrane electrode assembly (14) which comprises an electrochemically active region (23) consisting of two gas diffusion layers (17) and a catalyst-coated membrane (16) which are glued to a frame (18), having a bipolar plate (1) which has flow-distributing and flow-guiding elements (6, 7) in a flow region (25) corresponding to the electrochemically active region (23), wherein, in an edge region of the bipolar plate (1) surrounding the flow region (25), on at least one of its surfaces, a sealing groove (22) for receiving a seal (21) between the frame (18) and the bipolar plate (1) extends around the flow region (25), wherein,
a receiving groove (26) for a connection region (20) between the frame (18) and the membrane electrode assembly (15) is arranged correspondingly on both surfaces of the bipolar plate (1) in each case between the sealing groove (22) and the flow region (25).

2. The single cell assembly (13) according to claim 1,
**characterized in that**
a depth of the receiving groove (26), or when two corresponding receiving grooves (26) face each other when stacking the bipolar plates (1), their common depth is equal to or greater than the average thickness of the connection region (20) between the frame (18) and the membrane electrode assembly (15).

3. The single cell assembly (13) according to claim 1 or 2,
**characterized in that**
in the receiving groove (26) on at least one of the surfaces of the bipolar plate (1) and on at least one portion of the receiving groove (26) around the periphery of the flow region (25) on its side facing the flow region (25), a squeezing projection (27) is provided, the height of which is smaller than the depth of the respective receiving groove (26).

4. The single cell assembly (13) according to claim 3,
**characterized in that**
the squeezing projection (27) is formed as a step on the bottom of the receiving groove (26).

5. The single cell assembly (13) according to claim 1 and any one of claims 3 or 4,
**characterized in that**
the squeezing projection (27) is arranged in only one of the receiving grooves (26).

6. The single cell assembly (13) according to claim 3, 4 or 5,
**characterized in that**
the squeezing projection (27) is arranged only adjacent to the flow field (7) of the flow region (25) in the receiving groove (26).

7. The single cell assembly (13) according to any one of claims 3 to 6,
**characterized in that**
the squeezing projection (27) comprises a sequence of discrete individual projections.

8. The single cell assembly (13) according to any one of claims 1 to 7,
**characterized in that**,
between the receiving groove (26) and the flow region (25), a circumferentially closed flat region (28) of both surfaces of the bipolar plate (1) is provided, which terminates flush with the flow-distributing and flow-guiding elements (6, 7) or projects beyond them.

9. The single cell assembly (13) according to any one of claims 1 to 8,
**characterized in that**
the bipolar plate (1) is formed of a carbon-containing material within a plastic material matrix.

## Revendications

1. Ensemble de cellules individuelles (13) pour un empilement de piles à combustible avec un ensemble membrane-électrode encadré (14), qui comprend une zone électrochimiquement active (23) composée de deux couches de diffusion de gaz (17) et d'une membrane revêtue d'un catalyseur (16), qui sont collées à un cadre (18), avec une plaque bipolaire (1), laquelle présente des éléments de répartition et de guidage d'écoulement (6, 7) dans une zone d'écoulement (25) correspondant à la zone électrochimiquement active (23), dans lequel une rainure d'étanchéité (22) destinée à recevoir un joint d'étanchéité (21) entre le cadre (18) et la plaque bipolaire (1) tourne autour de la zone d'écoulement (25) dans une zone de bord, entourant la zone d'écoulement (25), de la plaque bipolaire (1) sur au moins une de ses surfaces, dans lequel
une rainure de réception (26) pour une zone de raccordement (20) entre le cadre (18) et l'ensemble membrane-électrode (15) est disposée de manière correspondante sur les deux surfaces de la plaque bipolaire (1) respectivement entre la rainure d'étanchéité (22) et la zone d'écoulement (25).

2. Ensemble de cellules individuelles (13) selon la revendication 1,
**caractérisé en ce**
**qu'**une profondeur de la rainure de réception (26) ou, lorsque deux rainures de réception (26) correspondantes se font face lors de l'empilement des plaques bipolaires (1), leur profondeur commune est supérieure ou égale à l'épaisseur moyenne de la zone de raccordement (20) entre le cadre (18) et l'ensemble membrane-électrode (15).

3. Ensemble de cellules individuelles (13) selon la revendication 1 ou 2,
**caractérisé en ce**
**qu'**une partie faisant saillie d'écrasement (27), dont la hauteur est inférieure à la profondeur de la rainure de réception (26) respective, est prévue dans la rainure de réception (26) sur au moins une des surfaces de la plaque bipolaire (1) et sur au moins une section de la rainure de réception (26) autour de la périphérie de la zone d'écoulement (25) sur son côté tourné vers la zone d'écoulement (25).

4. Ensemble de cellules individuelles (13) selon la revendication 3,
**caractérisé en ce**
**que** la partie faisant saillie d'écrasement (27) est réalisée en tant qu'échelon sur le fond de rainure de la rainure de réception (26).

5. Ensemble de cellules individuelles (13) selon la revendication 1 et selon l'une quelconque des revendications 3 ou 4,
**caractérisé en ce**
**que** la partie faisant saillie d'écrasement (27) n'est disposée que dans une des rainures de réception (26).

6. Ensemble de cellules individuelles (13) selon la revendication 3, 4 ou 5,
**caractérisé en ce**
**que** la partie faisant saillie d'écrasement (27) est disposée seulement à proximité du champ d'écoulement (7) de la zone d'écoulement (25) dans la rainure de réception (26).

7. Ensemble de cellules individuelles (13) selon l'une quelconque des revendications 3 à 6,
**caractérisé en ce**
**que** la partie faisant saillie d'écrasement (27) est constituée d'une succession de parties faisant saillie individuelles discrètes.

8. Ensemble de cellules individuelles (13) selon l'une quelconque des revendications 1 à 7,
**caractérisé en ce**
**qu'**une zone plane (28) fermée en périphérie des deux surfaces de la plaque bipolaire (1) est prévue entre la rainure de réception (26) et la zone d'écoulement (25), laquelle se termine à fleur avec les éléments de répartition et de guidage d'écoulement (6, 7) ou les dépasse.

9. Ensemble de cellules individuelles (13) selon l'une quelconque des revendications 1 à 8,
**caractérisé en ce**
**que** la plaque bipolaire (1) est réalisée à partir d'un matériau contenant du carbone dans une matrice en matière plastique.
